# FASCICULE DE BREVET EUROPEEN

(11) **EP 3 516 330 B1**
(45) Date de publication et mention de la délivrance du brevet: **04.08.2021**
(21) Numéro de dépôt: 17768189.7
(22) Date de dépôt: 04.09.2017
(51) Int. Cl.: G01B 21/04, G06T 7/80, B60R 1/00

(54) **MÉTHODE D'INSTALLATION D'UN RÉFÉRENTIEL GÉOMÉTRIQUE SUR UN SOL POUR LA CALIBRATION DE COMPOSANTS ÉLECTRIQUES OU ÉLECTRONIQUES D'UN VÉHICULE AUTOMOBILE ET UN ÉQUIPEMENT ADAPTÉ**
VERFAHREN ZUR INSTALLATION EINER GEOMETRISCHEN REFERENZ AUF EINEM BODEN FÜR DIE KALLIBRIERUNG VON ELEKTRISCHEN ODER ELEKTRONISCHEN KOMPONENTEN EINES KRAFTFAHRZEUGS UND EINE ANGEPASSTE AUSRÜSTUNG
METHOD FOR INSTALLING A GEOMETRIC REFERENCE MARKER ON A GROUND FOR CALIBRATING ELECTRICAL OR ELECTRONIC COMPONENTS OF A MOTOR VEHICLE AND ASSOCIATED EQUIPMENT

(30) Priorité: 20.09.2016 FR 1658803
(43) Date de publication de la demande: 31.07.2019
(73) Titulaire: Renault S.A.S., 92100 Boulogne-Billancourt (FR)
(72) Inventeur: FERREIRA, Frederico, 78490 Bazoches Sur Guyonne (FR); HOLLART, Cedric, 78990 Elancourt (FR)
(86) Numéro de dépôt international: PCT/FR2017/052331
(87) Numéro de publication internationale: WO 2018/055252

(56) Documents cités:
- EP-A2- 2 172 873
- DE-A1-102015 107 390
- FR-A1- 2 998 956
- GB-A- 2 075 185

## Description

L'invention concerne une méthode d'installation d'un référentiel géométrique sur un sol horizontal sensiblement plan pour la calibration de composants électriques et/ou électroniques d'un véhicule automobile et un équipement adapté.

L'utilisation de nouvelles technologies embarquées dans les véhicules automobiles, telles que par exemple la technologie ADAS (Advanced Driving Assist System - Système avancé d'aide à la conduite), amène les constructeurs automobiles à réaliser de nouvelles opérations de calibration et/ou d'apprentissage de composant(s) électrique(s) / électronique(s) aussi bien en usine qu'en après-vente. Ces opérations peuvent consister en un réglage physique et/ou électronique d'un ou plusieurs composants tels que par exemple une caméra vidéo (vision optique), un radar/télémètre (ondes électromagnétiques), un sonar (ondes sonores), un dispositif de télédétection LIDAR (« light detection and ranging », détection de la lumière et mesure à distance), notamment dans l'infrarouge, un laser (light amplification by stimulated emission of radiation); un projecteur d'éclairage (faisceau lumineux).

Ces opérations d'apprentissage, indispensables au bon fonctionnement de la technologie concernée, sont souvent lourdes et complexes à mettre en œuvre, notamment en après-vente. En général, elles consistent à positionner physiquement un outil, repère ou autre dans une zone précise autour du véhicule. En usine, le réglage peut être effectué dans une zone dédiée, les outils ou repères pouvant être présents de manière permanente sur le sol. Dans un atelier après-vente, la mise en place, notamment avec la précision requise, des outils ou repères peut s'avérer problématique, ces derniers ne pouvant être présents de manière permanente. En outre, il n'existe pas d'outils ou de repères faciles d'utilisation et peu coûteux.

On connaît par ailleurs via les documents FR 2 998 956 A1 et GB 2 075 185 des équipements et méthodes de référencement géométrique destinés à des mesures sur des véhicules automobiles. Ceux-ci ne permettent toutefois pas de répondre au besoin ci-dessus.

L'invention vise à pallier au moins en partie ces inconvénients en proposant une méthode d'installation d'un référentiel géométrique sur un sol horizontal sensiblement plan pour la calibration de composants électriques et/ou électroniques d'un véhicule automobile, ladite méthode d'installation comprenant :
- le positionnement du véhicule sur le sol, roues parallèles à un axe longitudinal du véhicule,
- le positionnement d'un équipement de référencement géométrique sur le sol autour du véhicule, ledit équipement de référencement comprenant un ensemble de plaques allongées distinctes formant des règles, chaque règle présentant une face plane inférieure reposant au moins partiellement sur le sol et chaque règle étant suffisamment rigide pour ne pas se déformer dans le plan de ladite face inférieure, le positionnement étant réalisé en posant les règles de l'équipement de réglage sur le sol selon un schéma prédéterminé, à une distance prédéterminée du véhicule.

L'utilisation de ce type de règles permet de s'affranchir de l'état du sol, notamment lorsque ce dernier n'est pas parfaitement plan, et d'assurer la linéarité du référentiel géométrique. En outre, les règles n'étant pas fixées au sol, elles peuvent être utilisées en n'importe quel lieu, notamment en après-vente ou même en usine, si l'on ne souhaite pas ramener le véhicule dans une zone dédiée.

L'installation d'un tel équipement de référencement géométrique est particulièrement bien adaptée au calibrage d'un ou plusieurs composants électriques et/ou électroniques d'un véhicule, par exemple choisi parmi une caméra vidéo, un radar/télémètre, un sonar, un dispositif de télédétection LIDAR, un laser et un projecteur d'éclairage.

Les règles étant distinctes les unes des autres, elles peuvent en outre être disposées selon divers schémas qui peuvent correspondre à différents référentiels géométriques requis pour des calibrations de composants.

Afin de faciliter le positionnement relatif des règles par rapport au véhicule et pour une meilleure précision du positionnement, il peut être préférable de positionner ledit équipement de référencement de sorte qu'il soit en contact avec le véhicule en au moins deux points distincts, par exemple au niveau d'une roue.

A cet effet, au moins une règle peut être en contact avec deux roues du véhicule, cette règle pouvant s'étendre parallèlement à la direction longitudinale du véhicule ou perpendiculairement à cette direction. Le contact entre cette règle et les roues peut être direct ou non, par exemple en utilisant au moins une cale de dimensions prédéterminées disposée entre cette règle et la roue, parallèlement à l'axe de celle-ci. Les dimensions de la cale peuvent alors être choisies en fonction de la distance prédéterminée entre l'équipement de référencement et le véhicule.

De manière générale, les repères utilisés sont parallèles ou perpendiculaires à la direction longitudinale du véhicule. Aussi, avantageusement, les règles de l'équipement de réglage peuvent être positionnées perpendiculairement ou parallèlement à un axe longitudinal du véhicule. Notamment une partie des règles peut être positionnée parallèlement et une autre partie perpendiculairement à l'axe longitudinal.

Dans cet agencement particulier, mais également pour tout autre agencement des règles les unes par rapport aux autres, les règles peuvent être réparties symétriquement par rapport à un axe prédéterminé, par exemple par rapport à un axe longitudinal central du véhicule ou par rapport à tout autre axe en fonction du référentiel géométrique requis pour une application particulière.

Le positionnement des règles peut être obtenu de manière simple en utilisant un fil à plomb et une équerre de dimensions adaptées.

Notamment, le positionnement d'une règle dans l'axe longitudinal central du véhicule peut être réalisé au moyen d'un fil à plomb positionné sur un repère central présent sur le véhicule (par exemple le logo de la marque à l'avant et à l'arrière ou le bouton d'ouverture du coffre à l'arrière. Le positionnement d'une règle dans l'axe d'une roue peut également être réalisé au moyen d'un fil à plomb.

Les angles droits entre les règles peuvent être obtenus en utilisant une équerre suffisamment grande, en particulier lorsque des règles perpendiculaires ne sont pas en butée.

Les différentes règles peuvent être mises en position dans n'importe quel ordre, il peut néanmoins être avantageux de positionner en premier les règles en contact avec les roues.

Afin de faciliter leur adaptation à différents gabarits de véhicule, les règles de l'équipement de réglage peuvent être réglables en longueur. Il est alors possible de choisir la longueur des règles afin que lesdites règles forment ledit schéma prédéterminé de référentiel géométrique pour le véhicule considéré. Cette longueur peut éventuellement choisie afin qu'au moins une partie des règles soient en butée contre d'autres règles, ce qui peut faciliter leur positionnement.

L'invention concerne également un procédé de calibration d'un composant électrique ou électronique d'un véhicule automobile comprenant :
- l'installation d'un référentiel géométrique adapté à la calibration dudit composant électrique ou électronique par mise en œuvre du procédé d'installation selon l'invention,
- le positionnement d'un ou plusieurs éléments de repérage requis pour ladite calibration dans une position prédéterminée par rapport au référentiel géométrique,
- la calibration dudit composant électrique ou électronique au moyen du ou des éléments de repérage.

En particulier, le ou les éléments de repérage peuvent être en appui contre l'équipement de référencement géométrique, agencés parallèlement à une règle ou formant un angle prédéterminé avec une règle.

Le ou les éléments de repérage peuvent comprendre des cibles, notamment des cibles verticales, par exemple des panneaux réfléchissant verticaux, ou autres.

L'invention concerne enfin un équipement de référencement géométrique pour la calibration de composants électriques et/ou électroniques d'un véhicule automobile comprenant un ensemble de plaques allongées distinctes formant des règles présentant chacune une face plane inférieure, chaque règle étant suffisamment rigide pour ne pas se déformer dans le plan de la face inférieure.

Un tel équipement peut notamment être utilisé pour la mise en œuvre de la méthode d'installation et du procédé de calibration de la présente invention.

Afin de faciliter le positionnement des règles les unes par rapport aux autres et par rapport au véhicule, ou d'éléments de repérage par rapport à l'équipement de référencement, au moins une partie des règles peut présenter au moins un élément de marquage choisi parmi un point de repère, une graduation, un élément de mesure d'angle, un élément de repère angulaire. La graduation peut être une graduation s'étendant suivant la longueur de la règle. Le ou les points de repère peuvent être prévus pour différents gabarits de véhicule ou différents schémas prédéterminés de référentiel géométrique. L'élément de mesure d'angle permet de positionner un élément par rapport à la règle suivant différents angles. Il peut s'agir d'un rapporteur solidaire de la règle. L'élément de repère angulaire forme un angle prédéterminé avec la règle. Il peut s'agir d'une plaque présentant une orientation correspondant à cet angle prédéterminé.

Pour faciliter l'utilisation des règles, notamment pour des véhicules de dimensions différentes, la longueur d'au moins une partie des règles peut être réglable. A cet effet, les règles peuvent être télescopiques ou encore être formées de segments reliés deux à deux par tout moyen approprié (encliquetage, emboîtement, aimantation, ...).

L'équipement de référencement géométrique peut comprendre des paires de règles non parallèles entres elles, optionnellement perpendiculaires, montées coulissantes l'une par rapport à l'autre. Ceci peut faciliter la mise en place d'un référentiel géométrique orthogonal ou non.

L'invention est maintenant décrite en référence aux dessins annexés, non limitatifs, dans lesquels :
- la figure 1 représente une vue de dessus d'un véhicule automobile équipé de composants électriques et électroniques ;
- Les figures 2A, 2B, 2C représentent schématiquement une vue de dessus d'un véhicule et différents référentiels géométriques pouvant être réalisés au moyen d'un équipement de référencement géométrique selon l'invention ;
- la figure 3A représente schématiquement une vue en perspective d'un véhicule autour duquel un équipement de référencement géométrique et un élément de repérage sont installés, selon un agencement pour la calibration d'une caméra avant ;
- la figure 3B représente schématiquement une vue en perspective d'un véhicule autour duquel un équipement de référencement géométrique et un élément de repérage sont installés, selon un agencement pour la calibration d'un dispositif de télédétection LIDAR ;
- les figures 4 et 5 représentent chacune une vue en perspective d'une règle d'un équipement de référencement géométrique selon des modes de réalisation différents de l'invention ;
- la figure 6 représente une vue de côté d'une règle d'un équipement de référencement géométrique selon un autre mode de réalisation.
- la figure 7 représente une vue en perspective de deux règles d'un équipement de référencement géométrique selon un autre mode de réalisation de l'invention ;
- les figures 8 et 9 sont des vues de dessus de deux règles d'un équipement de référencement géométrique selon encore d'autres modes de réalisation de l'invention ;
- la figure 10 représente une vue de face d'un véhicule.

Dans la présente description, les termes avant, arrière, supérieur, inférieur, font référence aux directions avant et arrière du véhicule. Les axes X, Y, Z, correspondent respectivement à l'axe longitudinal (d'avant en arrière), transversal et vertical du véhicule.

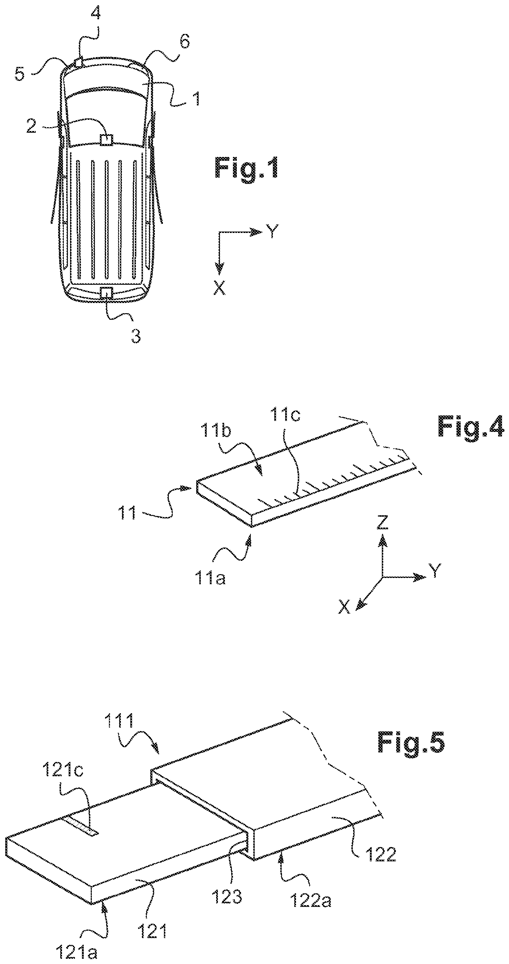

La figure 1 représente une vue de dessus d'un véhicule automobile 1 équipé d'une caméra avant 2, d'une caméra arrière 3, d'un dispositif de télédétection LIDAR 4, de projecteurs d'éclairage 5 et 6. Ces différents composants électriques et électroniques peuvent être utilisés par les technologies de type ADAS. A cet effet, il est nécessaire de procéder à leur calibration qui utilise en général un référentiel géométrique prédéterminé, défini par des zones de repérage sur le sol, généralement utilisant des tapis qui présentent l'inconvénient de ne pas pouvoir s'adapter à différents gabarits de véhicule et d'être difficiles à positionner précisément. Ce référentiel géométrique peut être prédéfini dans un calculateur qui sera utilisé pour la calibration.

La présente invention propose un équipement de référencement géométrique 10 qui peut être mis en place avec précision, facilement et rapidement en tout endroit, et notamment sur le sol d'un atelier ou de tout autre lieu. Cet équipement permet en outre de former différents schémas de référentiel géométrique.

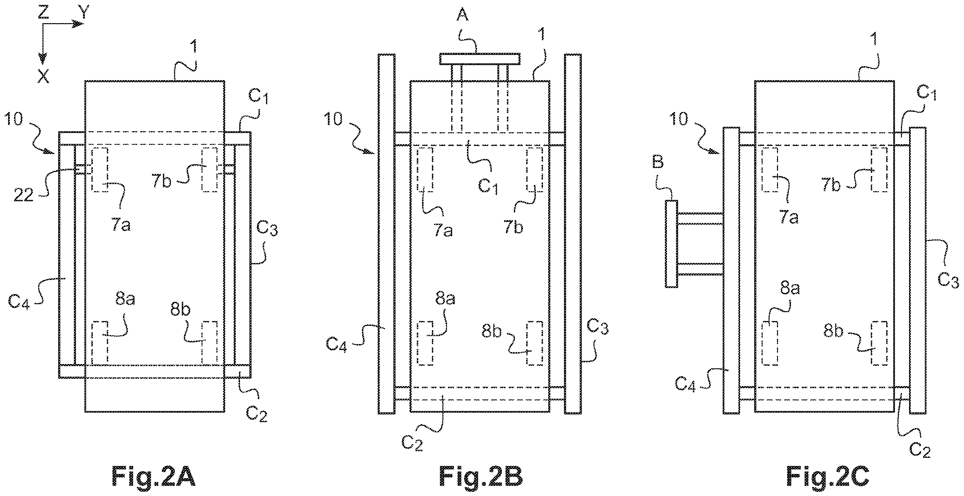

Les figures 2A, 2B, 2C représentent des exemples de référentiels géométriques pouvant être réalisés avec l'équipement de référencement géométrique 10 de la présente invention. Sur ces figures, le véhicule 1 est représenté de manière schématique, ainsi que les roues avant 7a, 7b et les roues arrière 8a, 8b.

Le schéma de référentiel géométrique de la figure 2A forme un cadre dont les côtés transversaux C1, C2 sont en appui contre les roues avant et arrière. Les côté longitudinaux C3, C4 sont en appui contre les roues avant, dans l'axe de leur essieu. En variante, seul un côté transversal peut être en contact contre les deux roues d'un même essieu, l'essieu avant ou l'essieu arrière.

Le schéma de référentiel géométrique de la figure 2B forme un cadre dont un côté transversal C1 est en appui contre les roues avant. Une extension A en forme de cadre est en appui contre ce côté transversal C1 et fait saillie du véhicule à l'avant de celui-ci.

Le schéma de référentiel géométrique de la figure 2C est similaire à celui de la figure 2B, mais l'extension en forme de cadre B est ici latérale, en appui contre un côté longitudinal C4.

L'invention n'est toutefois pas limitée à un schéma de référentiel géométrique particulier, lequel est adapté à chaque type de calibration. Néanmoins, en général, les référentiels géométriques utilisent des lignes parallèles aux axes longitudinal et transversal du véhicule.

Tel que déjà mentionné, l'équipement de référencement géométrique 10 selon l'invention peut être utilisé pour former des référentiels géométriques de formes variées.

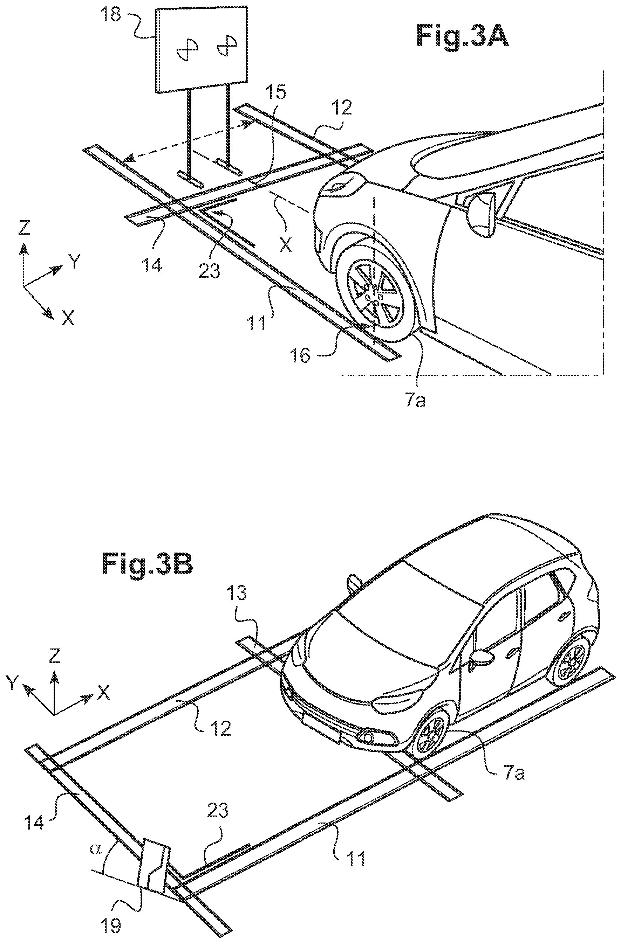

Les figures 3A et 3B représentent un équipement de référencement géométrique 10 disposé autour d'un véhicule 1 selon encore d'autres schémas. Cet équipement de repérage 10 présente un ensemble de plaques allongées distinctes formant des règles référencées de 11 à 14.

On notera que ces règles présentent ici des arêtes rectilignes et perpendiculaires entre elles. Autrement dit, chaque règle présente une forme rectangulaire dont la longueur est très supérieure à la largeur.

Les règles sont sensiblement identiques et diffèrent essentiellement par leur longueur.

Chaque règle 11-14 est en outre suffisamment rigide pour ne pas se déformer dans le plan de leur face inférieure. Ces règles peuvent être métalliques, par exemple en aluminium, en acier ou autre alliage de métaux, ou encore être dans un matériau polymère, ou en matériau métallique enrobé de matériau polymère, pourvu qu'elle présente la rigidité voulue.

Divers modes de réalisation de règles sont décrits en référence aux figures 4 à 9.

Tel que représenté sur la figure 4, une ou plusieurs règles 11-14 peuvent être graduées sur leur longueur, ou encore comporter des marques repères.

Dans le mode de réalisation représenté figure 4, la règle 11 comporte une face plane inférieure 11a et une face supérieure 11b présentant une graduation 11c. Cette face supérieure 11b est de préférence plane, mais des faces non planes sont envisageables.

La figure 5 représente un mode de réalisation dans lequel une règle 111 est formée de plusieurs tronçons 121, 122 qui coulissent l'un dans l'autre suivant leur direction longitudinale. Ceci permet de régler la longueur de la règle. L'un des tronçons 121 porte un repère 121c, ici sous forme d'un trait noir rectiligne. La paroi inférieure 123 du tronçon 122 peut alors être relativement peu épaisse (par exemple de 1cm ou moins) afin que la différence de niveau entre la face inférieure 121a et la face inférieure 122a soit relativement faible lorsque les deux tronçons reposent sur le sol.

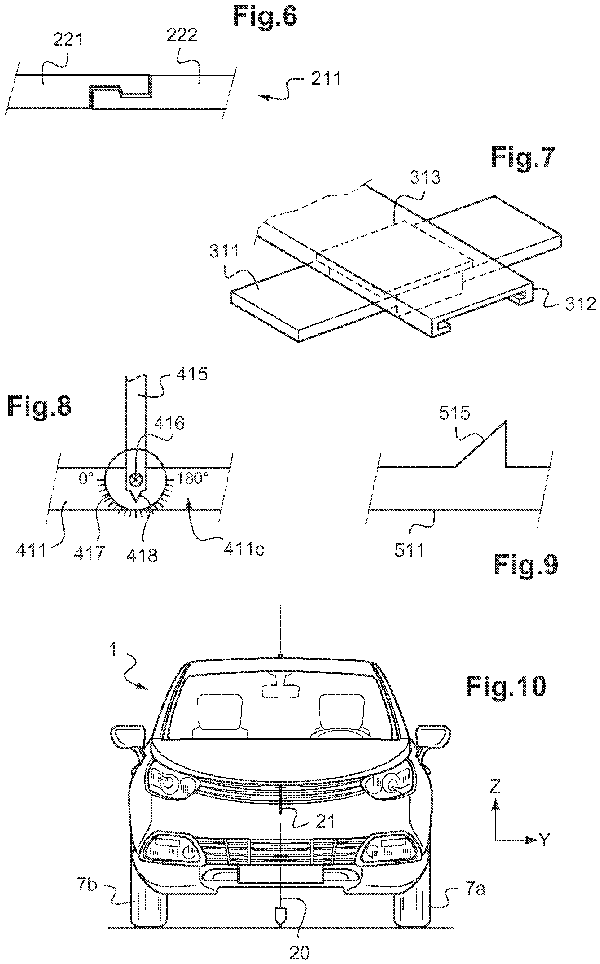

La figure 6 représente un mode de réalisation dans lequel une règle 211 est formée de plusieurs tronçons 221, 222 emboîtés les uns dans les autres.

Dans les modes de réalisation représentés figure 5 et 6, chaque tronçon présente une forme rectangulaire dans un plan horizontal. Bien entendu, l'invention n'est pas limitée à une forme particulière des tronçons ni à un nombre particulier de tronçons. On notera que les moyens de liaison des différents tronçons sont de préférence agencés de sorte que la règle soit rectiligne sur toute sa longueur.

La figure 7 représente un mode de réalisation dans lequel deux règles 311 et 312 sont montées coulissantes l'une par rapport à l'autre, en étant perpendiculaires l'une à l'autre. A cet effet, une réglette 313 coulissant sur la première règle 311 peut être prévue, la deuxième règle 312 étant montée à coulissement sur la réglette 313. Bien entendu, tout autre type de liaison glissière peut être prévu. Il peut également être prévu que seule l'une des règles puisse coulisser par rapport à l'autre et/ou que les règles ne se croisent pas à angle droit mais selon un autre angle prédéterminé.

La figure 8 représente un mode de réalisation dans lequel une règle 411 est équipée d'un élément de mesure d'angle 415. Ce dernier se présente sous la forme d'une plaque allongée dont une extrémité 415 est montée à rotation sur la face supérieure 411c de la règle 411 au moyen d'une vis ou similaire 416. Une graduation angulaire 416 permet de mesurer l'angle formé entre l'élément 415 et la règle 411, la vis 416 permettant de bloquer l'élément 415 lorsque l'angle choisi est atteint. Une extrémité 418 en forme de flèche de l'élément 415 permet de faciliter la lecture de l'angle. Dans le cas d'une règle réalisée en plusieurs tronçons, un tronçon peut être équipé de cet élément de mesure d'angle 415.

La figure 9 représente un mode de réalisation dans lequel une règle 511 comporte un élément de repère angulaire 515 fixe, ici de forme triangulaire.

Les différents modes de réalisation des règles décrits ci-dessus peuvent être combinés les uns aux autres. En outre, un équipement selon l'invention peut comporter des règles de différents modes de réalisation.

Des exemples d'installation d'un référentiel géométrique au moyen de l'équipement 10 selon l'invention sont maintenant décrits en référence aux figures 3A, 3B et 10. Les règles 11 à 14 sont telles que représenté sur la figure 4.

Sur ces figures, le véhicule 1 repose sur un sol horizontal sensiblement plan.

Par sensiblement plan, on entend une surface présentant des aspérités d'au plus 5 cm de hauteur, de préférence d'au plus 4 cm de hauteur.

Chaque règle étant suffisamment rigide pour ne pas se déformer dans un plan parallèle à sa face inférieure, on comprend que même posée sur un sol irrégulier, la face inférieure ne reposant alors pas entièrement sur le sol du fait des irrégularités de celui-ci, la règle reste rectiligne, ce qui permet l'utilisation du référentiel géométrique pour la calibration d'un composant électrique/électronique. Il en est de même lorsque la face inférieure d'une règle n'est pas strictement plane, par exemple dans le cas de règles se croisant ou de règles composées de segments.

Les roues motrices avant 7a, 7b du véhicule 1 sont positionnées parallèlement à l'axe longitudinal X du véhicule.

Par roue parallèle à un axe, on entend que le plan de la roue est parallèle à un axe ou encore que l'axe de rotation de la roue est perpendiculaire à cet axe. Ainsi, des roues sont parallèles à un axe longitudinal d'un véhicule lorsqu'elles sont « droites » et qu'un plan contenant la roue ne forme pas d'angle avec un plan vertical longitudinal du véhicule.

Une fois le véhicule positionné, l'équipement de repérage 10 peut être disposé sur le sol autour du véhicule, suivant un schéma adapté à la calibration souhaitée.

Le référentiel géométrique représenté sur la figure 3A est adapté à la calibration de la caméra avant 2 du véhicule.

Les différentes règles peuvent être disposées de la manière suivante :
- une première règle 11 et une deuxième règle 12 sont positionnées sur la longueur du véhicule, parallèlement à l'axe longitudinal X, en appui contre les roues avant 7a, 7b respectivement.
- Une troisième règle 14 est alors positionnée devant le véhicule parallèlement à l'axe transversal Y. A cet effet, elle est placée à angle droit par rapport aux règles 11 et 12. Cette troisième règle 14 présente un élément de repère 15, lequel est aligné sur l'axe longitudinal central X du véhicule. Pour ce faire, un fil à plomb 20 peut être tendu depuis un repère central 21 du véhicule, tel que représenté figure 10. Cette troisième règle 14 est en outre positionnée à une distance prédéterminée de l'essieu avant, mesurée en positionnant le fil à plomb 20 suivant la ligne 16 représentée figure 3A.

Les différentes règles se croisent ainsi à une distance prédéterminée du véhicule, choisie selon le référentiel géométrique utilisé par le calculateur pour la calibration. L'équipement de référencement géométrique 10 est en outre en contact avec le véhicule en plusieurs points, ce qui permet un positionnement précis par rapport au véhicule.

Une fois l'installation du référentiel géométrique effectuée, un élément de repérage 18 requis pour la calibration peut être positionné dans une position prédéterminée par rapport au référentiel géométrique. Cet élément de repérage 18 est ici un panneau vertical réfléchissant comportant deux cibles. Ce panneau 18 est disposé parallèlement à l'axe transversal Y du véhicule, à une distance prédéterminée de l'essieu avant, et à une position particulière en Y. La règle 14 ayant été positionnée à cette distance particulière, il suffit de positionner le panneau 18 contre la règle 14, à la position souhaitée en Y, correspondant ici au repère 15.

La calibration de la caméra avant peut alors être effectuée par un calculateur approprié en utilisant l'élément de repérage 18.

Le référentiel géométrique représenté sur la figure 3B est adapté à la calibration d'un dispositif de télédétection LIDAR 4 du véhicule.

Les différentes règles peuvent être disposées de la manière suivante :
- une première règle 11 et une deuxième règle 12 sont positionnées sur la longueur du véhicule, parallèlement à l'axe longitudinal X, en appui contre les roues avant 7a, 7b respectivement.
- Une troisième règle 13 est alors positionnée devant le véhicule parallèlement à l'axe transversal Y, en appui contre les roues.
- Une quatrième règle 14 est alors positionnée devant le véhicule parallèlement à l'axe transversal Y à une distance prédéterminée de la règle 13. A cet effet, elle est placée à angle droit par rapport aux règles 11 et 12.

Les différentes règles se croisent ainsi à une distance prédéterminée du véhicule, choisie selon le référentiel géométrique utilisé par le calculateur pour la calibration.

Une fois l'installation du référentiel géométrique effectuée, un élément de repérage 19 requis pour la calibration peut être positionné dans une position prédéterminée par rapport au référentiel géométrique. Cet élément de repérage 19 est ici un panneau vertical réfléchissant comportant une ligne brisée sensiblement verticale. Ce panneau 19 est disposé selon un angle prédéterminé α par rapport à l'axe transversal Y du véhicule, à une distance prédéterminée de l'essieu avant, et à une position particulière en Y. La règle 14 ayant été positionnée à cette distance particulière, il suffit de positionner le panneau 19 contre la règle 14, à la position souhaitée en Y, suivant l'angle α particulier requis. Eventuellement, la règle peut comporter un élément de repérage d'angle tel que précédemment décrit facilitant la mise en place du panneau 19 suivant l'angle recherché.

La calibration du dispositif de télédétection LIDAR peut alors être effectuée par un calculateur approprié en utilisant l'élément de repérage 19.

Dans les exemples précédemment décrit, les règles longitudinales sont en appui direct contre les roues. On peut néanmoins envisager qu'elles soient disposées à distance des roues, comme dans le référentiel géométrique représenté figure 2A. Dans ce cas, des cales ou d'autres règles 22 peuvent être positionnées dans l'axe de l'essieu, perpendiculairement à ces règles longitudinales.

On notera en outre que l'équipement de référencement géométrique 10 est positionné sur les figures de sorte qu'une partie des règles soit en butée contre une autre règle. Ceci peut faciliter le contrôle de l'angle entre ces règles, notamment au moyen d'une équerre 23 représentée figure 3A. Toutefois, il n'est pas nécessaire que les règles soient en butée contre la règle adjacente pour le réglage de l'angle, il suffit que l'équerre 23 soit suffisamment longue pour être mise en appui contre les deux règles à positionner perpendiculairement.

L'invention a été décrite pour la mise en place de règles orientées suivant des directions longitudinales et transversales. Les règles de l'équipement de référencement géométrique selon l'invention peuvent néanmoins être disposées les unes par rapport aux autres suivant des angles non droits. Des outils de mesure d'angle peuvent alors être utilisés, comme des rapporteurs ou des outils en coin formant l'angle requis. On comprend ainsi que l'équipement selon l'invention peut être utilisé pour tout type de schéma. Il peut en outre être mis en place aisément et rapidement en tout lieu. Enfin, il peut être mis en place pour différents gabarits de véhicules, en particulier lorsque certaines règles au moins sont de longueur réglable.

L'équipement de référencement géométrique selon l'invention peut ainsi être utilisé pour positionner précisément un ou plusieurs éléments de repérage très variés, de sorte qu'il peut être utilisé pour de nombreux types de calibration.

## Revendications

1. Méthode d'installation d'un référentiel géométrique sur un sol horizontal sensiblement plan pour la calibration de composants électriques et/ou électroniques d'un véhicule automobile (1), ladite méthode d'installation comprenant :
- le positionnement du véhicule (1) sur le sol, roues parallèles à un axe longitudinal (X) du véhicule,
- le positionnement d'un équipement de référencement géométrique (10) sur le sol autour du véhicule, ledit équipement de référencement (10) comprenant un ensemble de plaques allongées distinctes formant des règles (11-14), chaque règle (11-14) présentant une face plane inférieure (11a) reposant au moins partiellement sur le sol et étant suffisamment rigide pour ne pas se déformer dans le plan de ladite face inférieure, le positionnement étant réalisé en posant les règles de l'équipement de réglage sur le sol selon un schéma prédéterminé, à une distance prédéterminée du véhicule.

2. Méthode d'installation selon la revendication 1, dans laquelle on positionne ledit équipement de référencement (10) de sorte qu'il soit en contact avec le véhicule en au moins deux points distincts.

3. Méthode d'installation selon la revendication 1 ou 2, dans laquelle les règles (11-14) de l'équipement de référencement géométrique sont positionnées perpendiculairement ou parallèlement à un axe longitudinal (X) du véhicule, optionnellement réparties symétriquement par rapport à un axe longitudinal central du véhicule

4. Méthode d'installation selon l'une quelconque des revendications 1 à 3, dans laquelle au moins une cale (22) de dimensions prédéterminées est positionnée entre une roue (7a) et une règle lors du positionnement de l'équipement de repérage.

5. Méthode d'installation selon l'une quelconque des revendications 1 à 4, dans laquelle la longueur des règles (11-14) est réglable, cette longueur étant choisie afin que lesdites règles forment ledit schéma prédéterminé.

6. Procédé de calibration d'un composant électrique ou électronique d'un véhicule automobile comprenant :
- l'installation d'un référentiel géométrique adapté à la calibration dudit composant électrique ou électronique par mise en œuvre d'une méthode d'installation selon l'une quelconque des revendications 1 à 5,
- le positionnement d'un ou plusieurs éléments de repérage (18, 19) requis pour ladite calibration dans une position prédéterminée par rapport au référentiel géométrique,
- la calibration dudit composant électrique ou électronique au moyen du ou des éléments de repérage (18, 19).

7. Equipement de référencement géométrique (10) pour la calibration de composants électriques et/ou électroniques d'un véhicule automobile comprenant un ensemble de plaques allongées distinctes formant des règles (11-14) présentant chacune une face plane inférieure (11a), chaque règle étant suffisamment rigide pour ne pas se déformer dans le plan de la face inférieure, **caractérisé en ce qu'**il comprend des paires de règles non parallèles entres elles, optionnellement perpendiculaires, montées coulissantes l'une par rapport à l'autre.

8. Equipement de référencement géométrique (10) selon la revendication 7, **caractérisé en ce qu'**au moins une partie des règles présente au moins un élément de marquage choisi parmi un point de repère, une graduation, un élément de mesure d'angle, un élément de repère angulaire.

9. Equipement de référencement géométrique (10) selon la revendication 7 ou 8, **caractérisé en ce que** la longueur d'au moins une partie des règles est réglable.

## Patentansprüche

1. Verfahren zur Installation eines geometrischen Referenzsystems auf einem im Wesentlichen ebenen horizontalen Boden zur Kalibrierung elektrischer und/oder elektronischer Komponenten eines Kraftfahrzeugs (1), wobei das Installationsverfahren Folgendes umfasst:
- das Positionieren des Fahrzeugs (1) auf dem Boden, die Achsen parallel zu einer Längsachse (X) des Fahrzeugs,
- das Positionieren einer Ausrüstung zur geometrischen Referenzierung (10) auf dem Boden um das Fahrzeug, wobei die Referenzierungsausrüstung (10) eine Anordnung gesonderter länglicher Platten umfasst, die Lineale (11-14) bilden, wobei jedes Lineal (11-14) eine ebene Unterseite (11a) aufweist, die wenigstens teilweise auf dem Boden aufliegt und ausreichend starr ist, um sich in der Ebene der Unterseite nicht zu verformen, wobei das Positionieren durch Ablegen der Lineale der Einstellausrüstung auf dem Boden nach einem vorbestimmten Schema in einem vorbestimmten Abstand zum Fahrzeug durchgeführt wird.

2. Installationsverfahren nach Anspruch 1, wobei die Referenzierungsausrüstung (10) so positioniert wird, dass sie an mindestens zwei gesonderten Punkten mit dem Fahrzeug in Kontakt steht.

3. Installationsverfahren nach Anspruch 1 oder 2, wobei die Lineale (11-14) der Ausrüstung zur geometrischen Referenzierung senkrecht oder parallel zu einer Längsachse (X) des Fahrzeugs positioniert werden, optional bezogen auf eine mittlere Längsachse des Fahrzeugs symmetrisch verteilt werden.

4. Installationsverfahren nach einem der Ansprüche 1 bis 3, wobei beim Positionieren der Vermessungsausrüstung mindestens ein Keil (22) vorbestimmter Abmessungen zwischen einem Rad (7a) und einem Lineal positioniert wird.

5. Installationsverfahren nach einem der Ansprüche 1 bis 4, wobei die Länge der Lineale (11-14) einstellbar ist, wobei diese Länge so gewählt wird, dass die Lineale das vorbestimmte Schema bilden.

6. Verfahren zur Kalibrierung einer elektrischen oder elektronischen Komponente eines Kraftfahrzeugs umfassend:
- das Installieren eines geometrischen Referenzsystems, das zur Kalibrierung der elektrischen oder elektronischen Komponente geeignet ist, durch Umsetzung eines Installationsverfahrens nach einem der Ansprüche 1 bis 5,
- das Positionieren eines oder mehrerer Vermessungselemente (18, 19), die zur Kalibrierung erforderlich sind, in einer vorbestimmten Position bezogen auf das geometrische Referenzsystem,
- das Kalibrieren der elektrischen oder elektronischen Komponente mittels des oder der Vermessungselemente (18, 19).

7. Ausrüstung zur geometrischen Referenzierung (10) zur Kalibrierung elektrischer und/oder elektronischer Komponenten eines Kraftfahrzeugs umfassend eine Anordnung gesonderter länglicher Platten, die Lineale (11-14) bilden, die jeweils eine ebene Unterseite (11a) aufweisen, wobei jedes Lineal ausreichend starr ist, um sich in der Ebene der Unterseite nicht zu verformen, **dadurch gekennzeichnet, dass** sie Paare von Linealen umfasst, die nicht parallel zueinander, optional senkrecht verlaufen, die zueinander gleitend gelagert sind.

8. Ausrüstung zur geometrischen Referenzierung (10) nach Anspruch 7, **dadurch gekennzeichnet, dass** wenigstens ein Abschnitt der Lineale mindestens ein Markierungselement aufweist, das aus einem Bezugspunkt, einer Skala, einem Winkelmesselement, einem winkeligen Bezugselement gewählt ist.

9. Ausrüstung zur geometrischen Referenzierung (10) nach Anspruch 7 oder 8, **dadurch gekennzeichnet, dass** die Länge mindestens eines Abschnitts der Lineale einstellbar ist.

## Claims

1. Method for installing a geometric reference marker on a substantially flat horizontal ground for the calibration of electrical and/or electronic components of a motor vehicle (1), said installation method comprising:
- positioning the vehicle (1) on the ground, with the wheels parallel to a longitudinal axis (X) of the vehicle,
- positioning geometric referencing equipment (10) on the ground around the vehicle, said referencing equipment (10) comprising a set of distinct elongate plates forming rulers (11-14), each ruler (11-14) having a planar bottom face (11a) resting at least partially on the ground and being sufficiently rigid not to be deformed in the plane of said bottom face, the positioning being performed by placing the rulers of the adjustment equipment on the ground according to a predetermined pattern, at a predetermined distance from the vehicle.

2. Installation method according to Claim 1, wherein said referencing equipment (10) is positioned in such a way that it is in contact with the vehicle at at least two distinct points.

3. Installation method according to Claim 1 or 2, wherein the rulers (11-14) of the geometric referencing equipment are positioned at right angles or parallel to a longitudinal axis (X) of the vehicle, optionally distributed symmetrically relative to a central longitudinal axis of the vehicle.

4. Installation method according to any one of Claims 1 to 3, wherein at least one spacer (22) of predetermined dimensions is positioned between a wheel (7a) and a ruler during the positioning of the registration equipment.

5. Installation method according to any one of Claims 1 to 4, wherein the length of the rulers (11-14) is adjustable, this length being chosen in order for said rulers to form said predetermined pattern.

6. Method for calibrating an electrical or electronic component of a motor vehicle comprising:
- the installation of a geometric reference marker suitable for calibrating said electrical or electronic component through the implementation of an installation method according to any one of Claims 1 to 5,
- the positioning of one or more registration elements (18, 19) required for said calibration in a predetermined position relative to the geometric reference marker,
- the calibration of said electrical or electronic component by means of the registration element or elements (18, 19).

7. Geometric referencing equipment (10) for the calibration of electrical and/or electronic components of a motor vehicle comprising a set of distinct elongate plates forming rulers (11-14) each having a planar bottom face (11a), each ruler being sufficiently rigid not to be deformed in the plane of the bottom face, **characterized in that** it comprises pairs of rulers that are not parallel to one another, optionally at right angles, mounted to slide relative to one another.

8. Geometric referencing equipment (10) according to Claim 7, **characterized in that** at least a part of the rulers has at least one marking element chosen from among a control point, a graduation, an angle measurement element, an angle marker element.

9. Geometric referencing equipment (10) according to Claim 7 or 8, **characterized in that** the length of at least a part of the rulers is adjustable.
